# EUROPEAN PATENT SPECIFICATION

(11) **EP 2 593 322 B1**
(45) Date of publication and mention of the grant of the patent: **21.05.2014**
(21) Application number: 11733575.2
(22) Date of filing: 05.07.2011
(51) Int. Cl.: B60K 15/03, B29C 49/04, B29C 47/00, B29C 47/06, B29C 51/10, B29C 51/12, B29C 51/14, B29C 51/26, B32B 1/00, B32B 27/08, B32B 27/12, B32B 27/32, B29C 49/22, B29D 22/00, B65D 1/40

(54) **FUEL TANK OF PLASTIC AND METHOD FOR THE PRODUCTION THEREOF**
KRAFTSTOFFTANK AUS PLASTIK UND ZUGEHÖRIGES HERSTELLUNGSVERFAHREN
RÉSERVOIR DE CARBURANT EN PLASTIQUE ET SON PROCÉDÉ DE PRODUCTION

(30) Priority: 13.07.2010 DE 102010027096
(43) Date of publication of application: 22.05.2013
(73) Proprietor: Kautex Textron GmbH & Co. KG, 53229 Bonn (DE)
(72) Inventor: KARSCH, Ulrich, 53859 Niederkassel (DE)
(74) Representative: Kierdorf Ritschel
(86) International application number: PCT/EP2011/003319
(87) International publication number: WO 2012/007116

(56) References cited:
- EP-A2- 1 894 702
- WO-A1-94/12334
- WO-A1-99/03792
- WO-A1-2007/045466
- WO-A1-2007/093006
- DE-A1-102004 009 365
- US-A- 5 194 212

## Description

The invention concerns a method for producing, a fuel tank and a fuel tank of plastic obtained by the method.

Known plastic fuel tanks for motor vehicles are formed as fuel tanks based on polyethylene (HDPE). These usually have either a multilayered wall structure with barrier layers for hydrocarbons or have been made resistant to hydrocarbons by chemical treatment (fluorination/sulfonation). Plastic fuel tanks based on HDPE have the advantage that they can be produced with a spatially relatively complex design and have sufficient shape retention and stability. Such fuel tanks are also sufficiently impact resistant, so that, in the event of a crash, they can withstand corresponding collision forces. Short-term deformations of a fuel tank in the event of a crash do not generally lead to any permanent changes in contour. Finally, the known plastic fuel tanks also retain their shape to the greatest extent when the internal pressure is increased for a short time, at least such that they resume their original shape when the pressure subsides.

In order to prevent changes in shape of the envelope of fuel tanks in regions covering large areas of the container wall, it is known to provide supporting elements of various kinds inside the fuel tank. In the case of relatively small plastic fuel tanks, even the internals provided in the tank, for example in the form of internal baffles, feeding units or the like, have a stabilizing effect on the tank.

Stabilizing measures for plastic fuel tanks are becoming increasingly important with the introduction of hybrid vehicles. In the case of diesel or petrol vehicles, fuel tanks usually communicate essentially pressurelessly by way of a fuel vapour filter of varying size. While the internal combustion engine of the motor vehicle is in operation, the fuel vapour filter is backflushed, in that the air required for the engine is taken in via the fuel vapour filter during the operating phases of the engine. The absorption capacity of the fuel vapour filter is designed correspondingly.

In the case of modern hybrid vehicles, on the other hand, the number of operating cycles and the operating time of the internal combustion engine are greatly reduced. Consequently, the number and duration of the possible backflushing cycles of the fuel vapour filter are likewise restricted. This requires corresponding dimensioning of the fuel vapour filter, which is often subject to limits owing to installation space. For this reason, fuel tanks for hybrid vehicles are often sealed off from the atmosphere in such a way that pressure fluctuations with respect to the atmosphere of approximately + 400 mbar to - 150 mbar can occur in the fuel tank. It is intended that this pressure difference with respect to the atmosphere can be maintained as far as possible over relatively long periods of time.

Stabilization is important particularly in connection with fuel tanks based on polyethylene. This is so because polyethylene has the characteristic that, if subjected to sustained pressure and/or tension, it flows even at room temperatures, and so the known stabilizing measures in the form of supporting elements inside the tank do not produce satisfactory results under all circumstances.

A method for producing a fuel tank according to the preamble of claim 1 is known from WO 99/03792 A1.

The invention is therefore based on the object of providing a method for producing a fuel tank and a fuel tank of plastic obtained by the method that makes allowance for the problem described above.

The object on which the invention is based is achieved by a method for producing a fuel tank as defined in claim 1.

In the case of an expedient variant of the method according to the invention, it is provided that sheet-like elements of a non-cured thermosetting material are placed in the tool. These elements may be, for example, so-called "pre-pregs" (pre-impregnated fibres), that is to say semifinished products consisting of continuous fibres in an uncured thermosetting polymer matrix. The continuous fibres may take the form of a pure unidirectional layer, a woven fabric or a laid structure. For example, they may be placed in the tool as webs of woven fabric and fixed there.

In the case of a particularly advantageous variant of the method according to the invention, it is provided that the sheet-like elements are cured by contact heat transmission through the molten-hot shell-like semifinished products which are placed against the sheet-like elements fixed in the tool during the forming in the tool and thereby transmit the heat to the sheet-like elements. Appropriate setting of the curing characteristics of the matrix material (of the thermoset) achieve the effect that the sheet-like elements adapt themselves to the shrinkage of the polyethylene-based inner layer during the cooling process.

The method according to the invention either comprises the extrusion of tubular preforms, which are cut open to form sheet-like webs and spread out and formed into shells by using the heat of extrusion, or, alternatively, sheet-like preforms in web form may be extruded directly and formed into shells by using the heat of extrusion.

Using the heat of extrusion means essentially from the first heat of the polymer plasticated in an extruder.

Extrusion heads or coextrusion heads that are known per se, as also used in extrusion blow moulding, may be used in the extrusion of the preforms.

The method according to the invention is preferably carried out as an extrusion blow-moulding process, in which the preforms are formed into shells essentially in the first heat in a blow moulding tool and are joined together or welded to each other. The sheet-like elements in the form of elements of a fibre composite material are placed into the blow-moulding tool in such a way that they enclose the finished hollow body in the form of shells of fibre composite material.

According to the invention, the preforms are extruded in a multilayered state with at least one barrier layer for hydrocarbons and/or oxygen and with at least one bonding agent layer, the bonding agent layer being brought into contact with the sheet-like elements of fibre composite material in such a way that a material bond is produced between the inner layer and the outer layer.

In the case of an advantageous variant of the method according to the invention, the preforms of thermoplastic material in web form are first brought between the open parts of a 3-part blow moulding tool, two outer moulds forming a mould cavity which defines the contour of the finished article. In a first method step, the non-cured or only partially cured elements of a fibre composite material are placed in the cavities of the blow mould halves and fixed there. In a further step, sheet-like preforms of a polyethylene-based thermoplastic material in web form are brought between the open outer moulds of the blow moulding tool and a central mould/central tool arranged between them. In a further method step, the blow mould halves are closed against the central tool and the shells of thermoplastic material are formed against the sheet-like elements of a fibre composite material that are provided in the cavities. Directly after forming of the shells, the central tool is used to connect internals of the tank to the shells on the side thereof that is facing the mould cavity. In a further method step, the central tool is removed and the blow mould halves are closed against each other in such a way that the shells are welded to each other while forming a pinch-off weld. The pinch-off weld is produced essentially in the region of the inner layer of the fuel tank. It is not absolutely necessary for the elements of fibre composite material that form the outer layer of the fuel tank to be connected in the region of the pinch-off weld, since they enter into an intimate bond by bonding with the material of the inner layer.

The object is also achieved by a fuel tank of plastic as defined in claim 4. This "sandwich construction" means that the fuel tank has an outer, relatively rigid and lightweight layer, whereas the inner layer has a certain compliance and, in particular, ensures the impermeability of the entire fuel tank system. The fuel tank according to the invention combines the advantages of a high-strength rigid construction, which at the same time also has a certain brittleness, with the advantages of a shell which is compliant within certain limits and impermeable to hydrocarbons and, in the event of a crash, can absorb corresponding impact loads. According to the invention, the inner layer and the outer layer are materially bonded to each other.

In the case of a particularly preferred embodiment of the fuel tank according to the invention, it is provided that the multilayered extrudate, which is provided as the inner layer, is based on HDPE. The inner layer may have been produced in a conventional manner by a coextrusion process.

According to the invention, the inner layer and the outer layer of the fuel tank are connected to each other by means of a bonding agent.

The outer layer may, for example, consist of a fibre material in a thermosetting polymer matrix. In principle, thermoplastics also come into consideration as matrix materials.

Glass fibres/aramid fibres or carbon fibres, preferably as continuous fibres, come into consideration as fibre materials.

It is particularly expedient if a temperature-curable plastic is provided as the thermosetting plastic; in this way, the inner layer and the outer layer can be bonded to each other particularly advantageously in a single production process.

According to the invention, the inner layer comprises at least one barrier layer for hydrocarbons.

Particularly preferably, the inner layer is formed as a 4-layered co-extrudate, it being possible, for example, for an outer bonding agent layer of the co-extrudate at the same time to produce the material bond with the outer layer.

Previously known multilayered fuel tanks generally consist of a 6-layered co-extrudate, the layer structure comprising, from the inside to the outside, a non-coloured pure HDPE, a bonding agent layer, a barrier layer of EVOH, a further bonding agent layer, for example based on LDPE, a layer of recycled or reground material and an HDPE layer of carbon-blackcoloured HDPE.

In the case of the fuel tank according to the invention, the two outer layers of the tank wall are then advantageously substituted by a fibre composite material, it being possible for the thickness of the outer layer to be chosen such that the mass of the outer layer is less than or equal to the mass of the otherwise required outer layers of the co-extrudate. The bonding agent layer located on the EVOH layer serves in this case for producing the material bond with the outer layer.

The invention is explained below on the basis of an exemplary embodiment that is represented in the drawings, in which:
- Figure 1: shows a schematic perspective representation of the inner layer of a plastic fuel tank in the form of two elements of a fibre composite material,
- Figure 2: shows a schematic representation of a blow moulding tool for producing the fuel tank according to the invention when the sheet-like elements are being introduced into the cavities of the blow mould halves,
- Figure 3: shows a view corresponding to Figure 2 which illustrates the method step of extruding preforms of thermoplastic material,
- Figure 4: shows a corresponding view which illustrates the forming of the shells in the tool against the elements of fibre composite material,
- Figure 5: shows a view of the closed blow moulding tool during the welding of the shells of the fuel tank and
- Figure 6: shows an enlarged view of the wall structure of the fuel tank according to the invention.

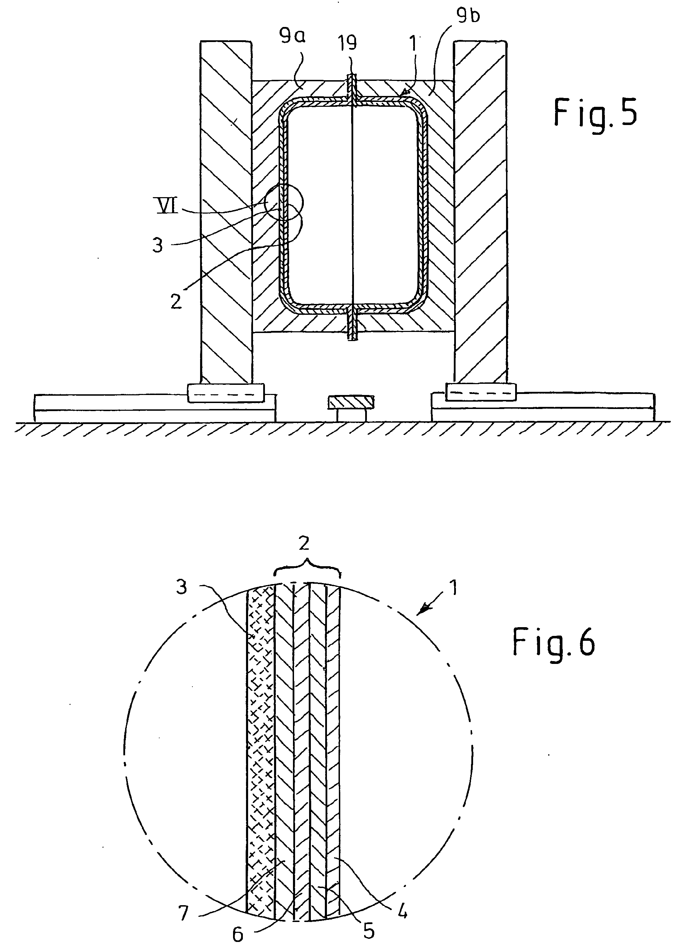

The fuel tank 1 of thermoplastic material that is represented in the drawings (Figure 5) is shown in a highly schematic simplified form. It comprises an inner layer 2 of a thermoplastic material and an outer layer 3 of a fibre composite material. The outer layer 3 comprises continuous fibres, for example glass fibres or carbon fibres, in a matrix of thermosetting, temperature-curable material. This may be, for example, an epoxy resin with a hardener which is temperature-activatable. The outer layer 3 completely encloses the fuel tank and enters into a material bond with the inner layer over the full surface area. The inner layer 2 is a 4-layered co-extrudate based on HDPE, comprising an inner HDPE layer 4, a first bonding agent layer 5 based on LDPE, a barrier layer 6 of EVOH and a second outer bonding agent layer 7, which produces a material bond with the outer layer 3 fibre composite material.

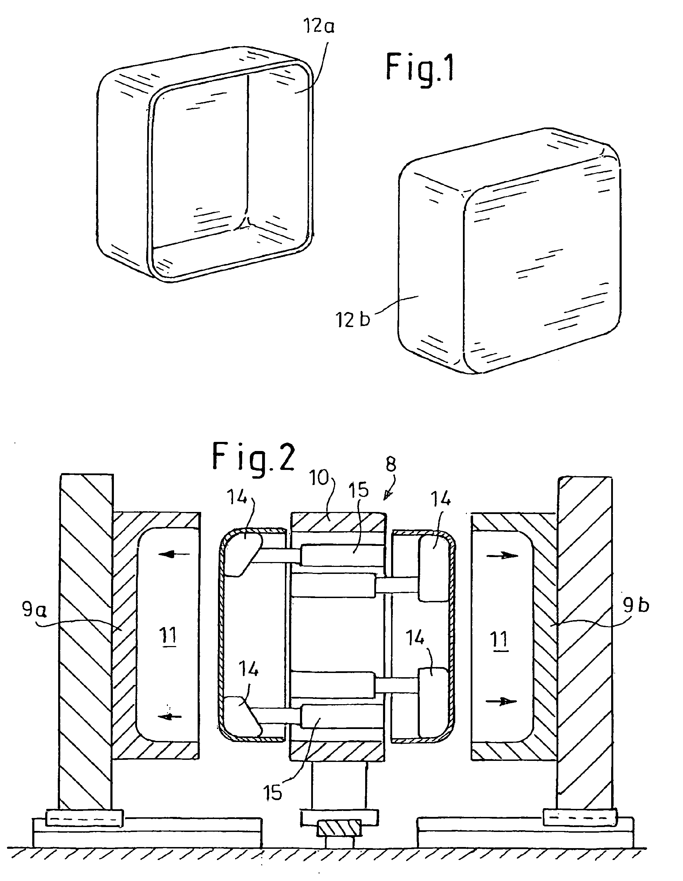

The production of the fuel tank 1 according to the invention takes place in the altogether 3-part blow moulding tool 8 represented in Figure 2, which comprises two outer moulds 9a, 9b and a central tool 10. The central tool 10 primarily serves the purpose of sealing off the cavity formed by the outer moulds 9a, 9b for the purpose of forming shells, and the central tool 10 secondarily serves the purpose of introducing inserts and elements of a fibre composite material into the cavities 11 of the outer moulds 9a, 9b.

Figure 1 shows two elements 12a, 12b, which already have the form of half-shells and in this form are brought into the cavities 11 of the outer moulds 9a, 9b in a completely cured state, as is intimated in Figure 2. The invention should be understood in principle as meaning that the elements 12a, 12b may also initially be brought between the opened parts of the outer moulds 9a, 9b as elements in web or strip form in a basically contourless state and placed against the cavities 11 of the outer moulds 9a, 9b by means of differential pressure, for example by means of a vacuum. They may, however, also be placed against the cavities by corresponding manipulators/handling devices and fixed there. Shown in the drawings is a variant in which the elements 12a, 12b already have the form of half-shells, which however are not completely able to retain their shape.

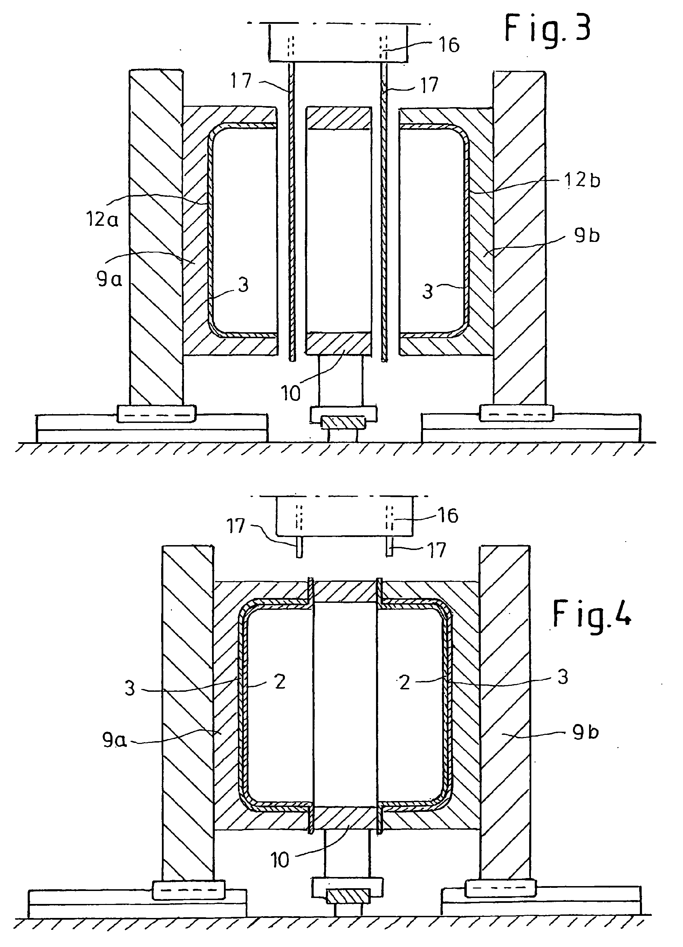

In a method step represented in Figure 2, arranged between the outer moulds 9a, 9b, which can be displaced away from each other and towards each other in the plane of the drawing, is a central tool 10, which can be displaced transversely in relation to the displacement movement of the outer moulds 9a, 9b, i.e. into and out of the plane of the drawing. The central tool 10 comprises component carriers 14, which can be made to move in and out in the direction of the outer moulds from the frame formed by the central tool 10 by means of pneumatic cylinders 15. In the case of the method step represented in Figure 2, the component carriers 14 are loaded with the elements 12a, 12b, which are first brought into the outer moulds 9a, 9b and placed there in the cavities 11. These elements may be fixed there, for example, by means of a vacuum. In a further method step (Figure 3), sheet-like preforms 17 in web or strip form are continuously extruded from the extrusion head in a hanging manner, i.e. in the direction of gravitational force. As mentioned above, the preforms 17 are formed as 4-layered co-extrudates based on HDPE with barrier layers of EVOH. In a further method step, the outer moulds 9a, 9b are closed against the central tool 10, the outer moulds 9a, 9b in each case clamping the preforms 17 against the central tool 10.

The blow moulding tool 8 is displaced away from under the extrusion head 16, in order not to hinder the emergence of the continuously extruded preforms 17.

Then, the preforms 17 (Figure 4) are placed against the elements 12a, 12b by applying differential pressure, for example by evacuating the cavities 11 or by applying blowing air to the inner wall of the cavities 11. As mentioned at the beginning, the elements 12a, 12b comprise a temperature-curable matrix of a thermosetting material. Curing of the elements in the contour defined by the cavities together with the thermoplastic material of the inner layer 2 to form half-shells 18 takes place by contact heat transmission from the molten-hot preforms 17. In a further method step, the central tool 10 can be used to introduce internals into the still molten-hot half-shells. The previously mentioned component carriers 14 may likewise be used, for example, for this purpose. Finally, the central tool 10 is removed from between the outer moulds 9a, 9b and they are closed against each other, the half-shells taking place to form the finished fuel tank 1 by the inner layer 2 being welded in the region of a peripheral pinch-off edge 19.

### List of designations

- 1: fuel tank
- 2: inner layer
- 3: outer layer
- 4: inner HDPE layer
- 5: first bonding agent layer
- 6: barrier layer
- 7: outer bonding agent layer
- 8: blow moulding tool
- 9a, 9b: outer mould
- 10: central tool
- 11: cavities
- 12a, 12b: elements
- 14: component carriers
- 15: pneumatic cylinders
- 16: extrusion head
- 17: preform
- 18: half-shells
- 19: pinch-off edge

## Claims

1. Method for producing a fuel tank, comprising the forming of two shell-like semifinished products (2) from thermoplastic material in a multipart tool (8), forming a mould cavity (11), and the connecting of the shells to form an essentially closed hollow body, with elements (3) of a fibre composite material being placed in the tool or adapted before the forming of the shells, said elements (3) being placed on the contour prescribed by the mould cavity, so that the fibre composite material enters into a material bond with the shell-like semifinished products during their forming, **characterized in that** the shell-like semifinished products (2) from thermoplastic material are obtained by the extrusion of tubular preforms which are cut open to form sheet-like webs and spread out and formed into shells by using the heat of extrusion or by the extrusion of sheet-like preforms (17) in web form which are formed into shells by using the heat of extrusion and wherein the preforms are extruded in a multilayered state with at least one barrier layer (6) for hydrocarbons and with at least one bonding agent layer (7), the bonding agent layer being brought into contact with the sheet-like elements (3) of fibre composite material.

2. Method according to Claim 1, **characterized in that** sheet-like elements of a non-cured thermosetting material are placed in the tool.

3. Method according to either of Claims 1 and 2, **characterized in that** the sheet-like elements are cured by contact heat transmission via the molten-hot shell-like semifinished products.

4. Fuel tank (1) of plastic obtained by the method according to anyone of claims 1 to 3 with a multilayered tank wall comprising at least one inner layer (2) of thermoplastic material and at least one outer layer (3) of a fibre composite material, where the inner layer (2) and the outer layer (3) are materially bonded to each other, and wherein a multilayered extrudate based on polyethylene, preferably based on HDPE, and comprising at least one barrier layer (6) for hydrocarbons is provided as the inner layer, wherein the inner layer (2) and the outer layer (3) are connected to each other by means of a bonding agent (7).

5. Fuel tank according to claim 4, **characterized in that** the outer layer (3) consists of a fibre material in a thermosetting polymer matrix.

6. Fuel tank according to one of Claims 4 or 5, **characterized in that** glass fibres or carbon fibres, preferably as continuous fibres, are provided as fibre material.

7. Fuel tank according to Claim 5, **characterized in that** a temperature-curable plastic, preferably based on epoxy resin, is provided as the thermosetting plastic.

8. Fuel tank according to one of Claims 4 to 7, **characterized in that** the inner layer (2) is formed as a 4-layered co-extrudate.

## Patentansprüche

1. Verfahren zur Herstellung eines Kraftstoffbehälters, umfassend das Formen zweier schalenförmiger Halbzeuge (2) aus thermoplastischem Material in einem mehrteiligen Werkzeug (8), das ein Formnest (11) bildet, und das Verbinden der Schalen zu einem im Wesentlichen geschlossenen Hohlkörper, wobei Elemente (3) aus einem Faserverbundmaterial vor dem Formen der Schalen in dem Werkzeug angeordnet werden, wobei die Elemente in die von dem Formnest gebildete Kontur eingelegt werden, so dass das Faserverbundmaterial während der Ausbildung der schalenförmigen Zwischenerzeugnisse mit diesem stoffschlüssig verbunden wird, **dadurch gekennzeichnet, dass** die schalenförmigen Halbzeuge (2) aus einem thermoplastischen Material durch das Extrudieren von schlauchförmigen Vorformlingen erhalten werden, die zu flächigen Bahnen aufgeschnitten und unter Ausnutzung der Extrusionswärme zu Schalen ausgeformt werden oder durch das Extrudieren von flächigen, bahnförmigen Vorformlingen erhalten werden, die unter Ausnutzung Extrusionswärme zu Schalen ausgeformt werden, wobei die Vorformlinge als mehrschichtige Vorformlinge mit wenigstens einer Barriereschicht (6) für Kohlenwasserstoffe und wenigstens eine Haftvermittlerschicht(7) extrudiert werden und die Haftvermittlerschicht mit den flächigen Elementen (3) aus Faserverbundmaterial in Kontakt gebracht werden.

2. Verfahren nach Anspruch 1, **dadurch gekennzeichnet, dass** die flächigen Elemente aus einem nicht ausgehärteten duroplastischen Material in das Werkzeug eingelegt werden.

3. Verfahren nach einem der Ansprüche 1 oder 2, **dadurch gekennzeichnet, dass** die flächigen Elemente durch Kontaktwärmeübertragung über die schmelzeheißen schalenförmigen Halbzeuge ausgehärtet werden.

4. Kraftstoffbehälter aus Kunststoff erhalten durch das Verfahren gemäß einem der Ansprüche 1 bis 3 mit einer mehrlagigen Wand des Behälters, umfassend wenigstens eine innere Schicht (2) aus einem thermoplastischen Material und wenigstens eine äußere Schicht (3) aus einem Faserverbundmaterial, wobei die innere Schicht (2) und die äußere Schicht (3) stoffschlüssig miteinander verbunden sind und wobei ein mehrschichtiges Extrudat auf der Basis von Polyethylen, vorzugsweise auf der Basis von HDPE umfassend wenigstens eine Barriereschicht (6) für Kohlenwasserstoffe als innere Schicht vorgesehen ist, wobei die innere Schicht (2) und die äußere Schicht (3) miteinander mittels eines Haftvermittlers (7) verbunden sind.

5. Kraftstoffbehälter nach Anspruch 4, **dadurch gekennzeichnet, dass** wenigstens die äußere Schicht aus einem Faserverbundmaterial und einer duroplastischen Kunststoffmatrix besteht.

6. Kraftstoffbehälter nach einem der Ansprüche 4 oder 5, **dadurch gekennzeichnet, dass** als Fasermaterial Glasfasern oder Kohlefasern, vorzugsweise als Endlosfasern vorgesehen sind.

7. Kraftstoffbehälter nach Anspruch 5, **dadurch gekennzeichnet, dass** als duroplastischer Kunststoff ein temperaturaushärtbarer Kunststoff, vorzugsweise auf Epoxidharz-Basis vorgesehen ist.

8. Kraftstoffbehälter nach einem der Ansprüche 4 bis 7, **dadurch gekennzeichnet, dass** die innere Schicht als vierlagiges Coextrudat ausgebildet ist.

## Revendications

1. Procédé pour produire un réservoir de carburant, comprenant la formation de deux produits semi-finis de type coques (2) à partir d'un matériau thermoplastique dans un outil à multiples parties (8), la formation d'une cavité de moule (11), et la liaison des coques pour former un corps creux essentiellement fermé, les éléments (3) en un matériau composite fibreux étant placés dans l'outil ou adaptés avant de former les coques, lesdits éléments (3) étant placés sur le contour prescrit par la cavité de moule, de sorte que le matériau composite fibreux entre dans un état de liaison de matériaux avec les produits semi-finis de type coques pendant leur formation, **caractérisé en ce que** les produits semi-finis de type coques (2) provenant d'un matériau thermoplastique sont obtenus par l'extrusion de préformes tubulaires qui sont ouvertes par découpe pour former des bandes de type feuilles et étalées et mises en forme de coques en utilisant la chaleur de l'extrusion ou par l'extrusion de préformes de type feuilles (17) en une forme de bande qui sont mises en forme de coques en utilisant la chaleur de l'extrusion, et dans lequel les préformes sont extrudées dans un état multicouche avec au moins une couche de barrière (6) pour les hydrocarbures et avec au moins une couche d'agent de liaison (7), la couche d'agent de liaison étant amenée en contact avec les éléments de type feuilles (3) de matériau composite fibreux.

2. Procédé selon la revendication 1, **caractérisé en ce que** les éléments de type feuilles en un matériau thermodurcissable non durci sont placés dans l'outil.

3. Procédé selon l'une ou l'autre des revendications 1 et 2, **caractérisé en ce que** les éléments de type feuilles sont durcis par une transmission de chaleur par contact par l'intermédiaire des produits semi-finis de type coques thermofondus.

4. Réservoir de carburant (1) en matière plastique obtenu par le procédé selon l'une quelconque des revendications 1 à 3 avec une paroi de réservoir à couches multiples comprenant au moins une couche intérieure (2) de matériau thermoplastique et au moins une couche extérieure (3) d'un matériau composite fibreux, dans lequel la couche intérieure (2) et la couche extérieure (3) sont liées matériellement l'une à l'autre, et dans lequel un extrudât multicouche à base de polyéthylène, de préférence à base de HDPE, et comprenant au moins une couche de barrière (6) pour les hydrocarbures est fourni en tant que couche intérieure, dans lequel la couche intérieure (2) et la couche extérieure (3) sont reliées l'une à l'autre au moyen d'un agent de liaison (7).

5. Réservoir de carburant selon la revendication 4, **caractérisé en ce que** la couche extérieure (3) consiste en un matériau fibreux dans une matrice polymère thermodurcissable.

6. Réservoir de carburant selon l'une des revendications 4 et 5, **caractérisé en ce que** des fibres de verre ou des fibres de carbone, de préférence en tant que fibres continues, sont fournies en tant que matériau fibreux.

7. Réservoir de carburant selon la revendication 5, **caractérisé en ce qu'**une matière plastique durcissable à la chaleur, de préférence à base de résine époxy, est fournie en tant que matière plastique thermodurcissable.

8. Réservoir de carburant selon l'une des revendications 4 à 7, **caractérisé en ce que** la couche intérieure (2) est formée en tant que co-extrudât à 4 couches.
